**Europäisches Patentamt**

**European Patent Office**

**Office européen des brevets**

(11) Numéro de publication: **0 058 593**
**B1**

(12) **FASCICULE DE BREVET EUROPEEN**

(45) Date de publication du fascicule du brevet: **06.11.85**

(51) Int. Cl.⁴: **G 02 F 1/133**

(21) Numéro de dépôt: **82400167.1**

(22) Date de dépôt: **29.01.82**

(54) **Dispositif d'affichage matriciel à plusieurs jeux d'électrodes et son procédé de commande.**

(30) Priorité: **05.02.81 FR 8102219**

(43) Date de publication de la demande:
**25.08.82 Bulletin 82/34**

(45) Mention de la délivrance du brevet:
**06.11.85 Bulletin 85/45**

(84) Etats contractants désignés:
**CH DE GB IT LI NL**

(56) Documents cités:
**DE-A-2 141 826**
**FR-A-2 250 174**
**FR-A-2 258 682**
**GB-A-2 052 125**
**US-A-3 982 239**
**US-A-3 989 355**

(73) Titulaire: **COMMISSARIAT A L'ENERGIE ATOMIQUE Etablissement de Caractère Scientifique Technique et Industriel 31/33, rue de la Fédération F-75015 Paris (FR)**

(72) Inventeur: **Clerc, Jean Frédéric c/o LA L.E.T.I.-C.E.S. B.P. 85X F-38041 Grenoble Cédex (FR)**
Inventeur: **Robert, Jacques c/o LA D.I.E.L.I. 120, Rue du Cherche Midi F-75006 Paris (FR)**

(74) Mandataire: **Mongrédien, André et al c/o BREVATOME 25, rue de Ponthieu F-75008 Paris (FR)**

Courier Press, Leamington Spa, England.

EP 0 058 593 B1

## Description

La présente invention a pour objet un dispositif d'affichage matriciel à plusieurs jeux d'électrodes et son procédé de commande. Elle trouve une application en opto-électronique, et principalement dans la commande de cellules à cristaux liquides utilisées notamment comme convertisseurs d'informations électriques en informations optiques, dans le traitement des images optiques en temps réel, dans la réalisation de filtres colorés pouvant servir notamment en télévision en couleur, et dans l'affichage analogique.

Plus spécialement le présent dispositif d'affichage matriciel comprend une cellule d'affichage constituée par deux parois isolantes transparentes et par un matériau électro-optique comprenant une pluralité de zones réparties en matrice et intercalées entre un premier système d'électrodes recouvrant l'une des deux parois et définissant $p$ colonnes de commande et un deuxième système d'électrodes recouvrant l'autre paroi, constituées de bandes conductrices parallèles, et définissant $q$ lignes de commande, la colonne $x_i$, où i est un entier tel que $1 \leq i \leq p$ et la ligne $y_j$, où j est un entier tel que $1 \leq j \leq 1$ définissant une zone $x_i y_j$ du matériau, et comprend des moyens permettant de délivrer sur les lignes et les colonnes des signaux d'excitation appropriés servant à exciter une propriété optique du matériau.

On connaît de nombreux dispositifs de ce genre qui utilisent par exemple comme matériau sensible un film de cristal liquide, et pour lesquels l'excitation est électrique. L'invention s'applique particulièrement bien à de tels dispositifs mais elle s'applique de manière plus générale à tout dispositif comprenant un matériau dont une propriété optique peut être modifiée à l'aide d'une excitation électrique. Le matériau peut être un corps solide ou liquide, amorphe ou cristallin. La propriété optique peut être une opacité, un indice de réfraction, une transparence, une absorption, une diffusion, une diffraction, une convergence, un pouvoir rotatoire, une biréfringence, une intensité réfléchie dans un angle solids déterminé, etc.

Un procédé de commande de tels dispositifs d'affichage connus consiste par exemple dans le cas d'une cellule à cristaux liquides où l'excitation est de nature électrique, à appliquer sur la ligne $x_i$ une tension $V_x$ périodique de valeur moyenne nulle et sur les autres lignes une tension nulle et à appliquer sur les colonnes $y_j$ des tensions $V_{y_j}$ périodiques de valeur moyenne nulle, de même durée et de même fréquence que la tension $V_x$ mais qui sont déphasées par rapport à celles-ci d'une quantité $\varphi_{ji}$. Ce déphasage $\varphi_{ji}$ permet de faire varier l'intensité du signal à afficher, c'est-à-dire permet d'obtenir différents niveaux de gris.

Un tel procédé de commande est décrit dans le brevet français FR—A—2 279 123 déposé le 6 février 1974 par le demandeur et intitulé "procédé de commande d'une caractéristique optique d'un matériau et imageur analogique mettant en oeuvre ledit procédé".

Un affichage binaire est évidemment obtenu en appliquant sur les lignes $x_i$ les mêmes tensions $V_x$ de balayage et en appliquant sur les colonnes $y_j$ des tensions $v_{y_j}$ de même durée, de même fréquence que $V_x$, soit en phase, soit en opposition de phase par rapport à $V_x$, suivant que l'on veut afficher un blanc ou un noir.

Dans les deux cas, il faut autant de circuits de commande de ligne que de lignes.

Dans un document US—A—3 989 355, il est décrit un dispositif d'affichage à bandes croisées dans lequel le système d'électrodes lignes et le système d'électrodes colonnes sont formés respectivement de plusieurs jeux d'électrodes lignes et de plusieurs jeux d'électrodes colonnes, disposés les uns au-dessus des autres et isolés les uns des autres, chaque jeu d'électrodes étant constitué de deux ensembles d'électrodes formées chacun de $p/2^k$ électrodes reliées entre elles, k étant un entier différent d'un jeu à l'autre, tel que $1 \leq k \leq n$.

Dans ce dispositif, la disposition des différentes jeux d'électrodes nécessite l'utilisation d'un grand nombre de circuits de commande.

La présent invention a pour objet un dispositif d'affichage à plusieurs jeux d'électrodes et son procédé de commande permettant notamment de limiter le nombre de circuits de commande du dispositif et de simplifier ces circuits.

La présente invention concerne un dispositif d'affichage matriciel comprenant une cellule d'affichage constitué de deux parois isolantes, et d'un matériau électro-optique comprenant une pluralité de zones réparties en matrice et intercalées entre un premier système d'électrodes recouvrant l'une des deux parois et définissant p colonnes de commande et un deuxième système d'électrodes recouvrant l'autre paroi, constituées de bandes conductrices parallèles, et définissant q lignes de commande, la colonne $x_i$, où i est un entier quel que $1 \leq i \leq p$ et la ligne $y_j$, où j est un entier tel que $1 \leq j \leq q$ définissant une zone $x_i y_j$ du matériau, et comprenant des moyens permettant de délivrer sur les lignes et les colonnes des signaux d'excitation appropriés, ledit matériau présentant une propriété optique dépendant de ladite excitation. De façon connue, le premier sytème d'électrodes comprend n jeux d'électrodes disposées et groupées de façon que chaque jeu est constitué de deux ensembles d'électrodes et que le choix d'un ensemble de chaque jeu corresponde à une colonne de commande et une seule, les n jeux d'électrodes étant disposés les uns au-dessus des autres et isolés électriquement les uns des autres, chaque ensemble comportant $p/2^k$ électrodes reliées électriquement entre elles, où k est un entier différent d'un jeu à l'autre tel que $1 \leq k \leq n$. Ce dispositif se caractérisé en ce que le premier système d'électrodes comprend en outre une électrode pleine couche disposée directement sur la paroi isolante correspondante sous les n jeux d'électrodes et isolée électriquement desdits jeux d'électrodes et en ceque les moyens permettant de commander la propriété optique du matériau de la zone $x_i y_j$ comprennent des moyens pour appliquer un potentiel $-V_1$ sur l'électrode pleine couche et un potentiel $-V_0$ sur tous les ensembles d'électrodes excepté celui qui correspond à la colonne $x_i$, ledit ensemble étant mis en haute impédance, et des moyens pour appliquer sur la ligne $y_j$ un potentiel $V_2$ tel que la tension $V_2+V_1$ corresponde à la valeur désirée de la propriété optique du matériau dans la zone $x_i y_j$ et que la tension $V_2+V_0$ soit inférieure à la tension d'excitation de la propriété optique du matériau.

Selon un mode préféré de réalisation du dispositif d'affichage de l'invention, le matériau est un film à cristal liquide dont la propriété optique dépend du champ électrique qui lui est appliqué.

La présente invention a également pour objet un procédé de commande d'un dispositif d'affichage matriciel tel que défini ci-dessus. Ce procédé est caractérisé en ce que, pour commander la propriété optique du matériau de la zone $x_i y_j$, on applique un potentiel $-V_1$ sur l'électrode pleine couche et un potentiel $-V_0$ sur tous les ensembles d'électrodes excepté celui qui correspond à la colonne $x_i$, ledit ensemble étant mis en haute impédance et on applique sur la ligne $y_j$ un potentiel $V_2$ tel que la tension $V_2+V_1$ corresponde à la valeur désirée de la propriété optique du matériau dans la zone $x_i y_j$ et que la tension $V_2+V_0$ soit inférieure à la tension d'excitation de la propriété optique du matériau.

Selon une variante du procédé de l'invention, on commande simultanément les q zones d'une même colonne $x_i$ en appliquant simultanément sur chaque ligne le potentiel $V_2$.

De toute façon, les caractéristiques et avantages de la présente invention apparaîtront mieux après la description qui suit, d'exemples de réalisation donnés à titre explicatif et nullement limitatif. Pour plus de clarté, la description se réfère à un dispositif d'affichage comprenant comme matériau un film de cristal liquide dont la propriété optique dépend du champ électrique qui lui est appliqué. Comme on l'a indiqué plus haut, l'invention est d'application beaucoup plus générale, mais ces dispositifs d'affichage étant actuellement bien connus et largement utilisés, il est préférable d'effecteur la description sur cet exemple.

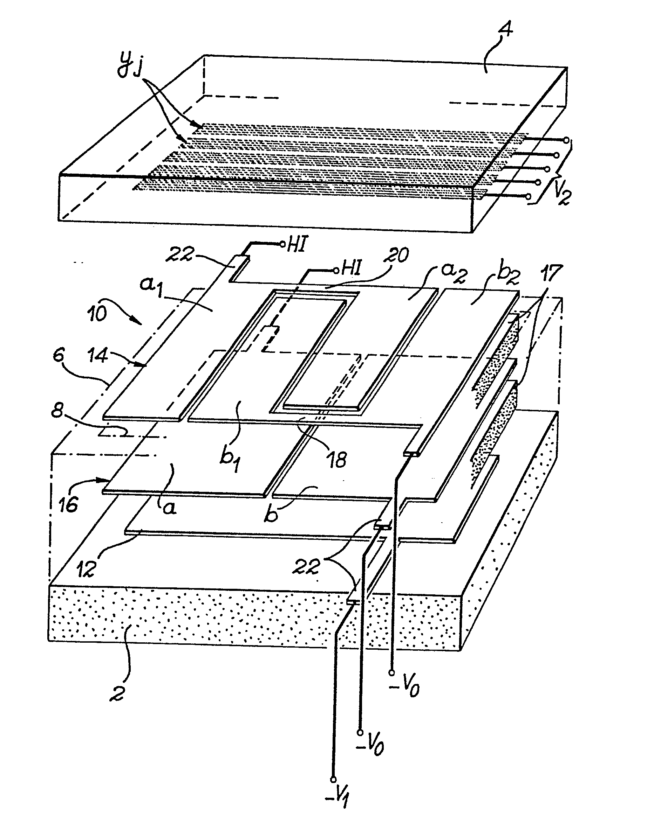

La description se réfère à une unique figure annexée qui représente schématiquement un dispositif d'affichage matriciel, conformément à l'invention.

Cette figure représente schématiquement une cellule d'affichage comportant deux parois isolantes 2 et 4, généralement transparentes telles que des parois en verre, disposées de part et d'autre d'une cale d'épaisseur 6, en matériau isolant, définissant un volume 8 qui est occupé, lorsque la cellule est montée par le matériau dont on commande une propriété optique, par exemple un film de cristal liquide. Sur la paroi isolante 2 est déposé un premier système d'électrodes 10 définissant $p$ colonnes de commande de la propriété optique du matériau d'affichage et sur la paroi isolante 4 un deuxième système d'électrodes constituées de bandes conductrices parallèles transparentes, notées $y_j$ et définissant $q$ lignes de commande de ladite propriété optique. Ces deux systèmes d'électrodes peuvent être réalisés en oxyde d'indium.

De façon à mieux voir les différents éléments constituant le premier système d'électrodes 10, les dimensions et notamment l'épaisseur de ce système n'ont pas été respectées.

Selon l'invention, le premier système d'électrodes 10 comprend une électrode pleine couche 12, située directement sur la paroi isolante 2, et $n$ jeux d'électrodes tels que 14 et 16, où n est un entier tel que $2^n=p$, p étant le nombre de colonnes de commande. Les $n$ jeux d'électrodes sont constitués chacun de deux ensembles d'électrodes référencées $a$ et $b$. Les électrodes sont groupées de façon que le choix d'un ensemble dans chaque jeu corresponde à une seule colonne de commande de la propriété optique du matériau d'affichage; le groupement des électrodes sera décrit ultérieurement. Les $n$ jeux d'électrodes sont disposés les uns au-dessus des autres et au-dessus de l'électrode pleine couche 12. Ces $n$ jeux d'électrodes sont isolées électriquement les uns des autres et isolés de l'électrode pleine couche au moyen de couches isolantes telles que 17 intercalées entre chaque jeu et l'électrode 12.

Chaque ensemble d'électrodes $a$ ou $b$ du $k^{ième}$ jeu d'électrodes comprend $p/2^k$ électrodes, k étant un entier tel que $1 \leqslant k \leqslant n$ et p le nombre de colonnes de commande du dispositif d'affichage. Sur la figure on n'a représenté que deux jeux d'électrodes, c'est-à-dire que n égale 2; le jeu référencé 14 correspond à k égale à un et le jeu référencé 16 à k égale à deux. L'utilisation de deux jeux d'électrodes, correspondant à quatre colonnes de commande, conduit à ce que l'ensemble a ou b du jeu 14 comprenne deux électrodes référencées $a_1$ et $a_2$ ou $b_1$ et $b_2$ et à ce que l'ensemble a ou b du jeu 16 comprenne une électrode a ou b. Sur le mode de réalisation représenté sur la figure, les deux jeux d'électrodes sont ordonnés selon les valeurs décroissantes de l'entier k.

Les électrodes d'un même ensemble sont reliées électriquement entre elles, de préférence au moyen de connexions telles que 18 et 20 comme représenté sur la figure. Par exemple pour le jeu d'électrodes 14 constitué de quatre électrodes $a_1$, $a_2$, $b_1$ et $b_2$, l'électrode $b_1$ est intercalée entre l'électrode $a_1$ et l'électrode $a_2$ et en regard de la connexion 20 reliant lesdites, électrodes $a_1$ et $a_2$, et l'électrode $a_2$ est intercalée entre l'électrode $b_1$ et $b_2$ et en regard de la connexion 18 reliant lesdites électrodes $b_1$ et $b_2$.

Il est à noter que le nombre d'électrodes du jeu d'électrodes k=1 est égal au nombre $p$ de colonnes de commande de la propriété optique du matériau d'affichage (soit deux ensembles comprenant chacun p/2 électrodes).

La surface utile du cristal liquide est ainsi décomposée en une mosaïque de zones correspondant aux zones de recouvrement des deux systèmes d'électrodes, chaque zone correspondant au recouvrement d'une électrode du jeu $k=1$ et d'une électrode ligne $y_j$. Les électrodes des $n$ jeux d'électrodes situées en regard d'une électrode du jeu $k=1$ définissent un groupe d'électrodes que l'on notera $x_i$ correspondant à une colonne de commande. La zone de cristal liquide comprise entre l'électrode ligne $y_j$ et le groupe d'électrodes $x_i$ peut être repérée par la notation $x_iy_j$.

L'excitation d'une zone $x_iy_j$, c'est-à-dire la commande d'une propriété optique du cristal liquide contenu dans cette zone, s'effectue en appliquant sur les groupes d'électrodes $x_i$ et sur les électrodes lignes $y_j$ des potentiels, délivrés par des sources d'alimentation électrique, non représentées, qui entraînent l'apparition d'un champ électrique au sein du cristal liquide. On fait ainsi apparaître une image sur l'ensemble de la cellule en la définissant point par point et en excitant les zones les unes après les autres selon les principes connus de commande séquentielle.

Dans un dispositif d'affichage utilisant une cellule à cristal liquide, par exemple du type nématique, le phénomène utilisé est l'orientation collective des molécules dudit cristal parallèlement aux électrodes lorsque ledit cristal est soumis à un champ électrique. Le phénomène utilisé dans un tel dispositif est décrit dans le brevet français n° 2 279 123, précédemment cité.

L'excitation d'une zone $x_iy_j$ du matériau, selon l'invention, s'effectue en appliquant sur la ligne $y_j$ du deuxième système d'électrodes un potentiel $V_2$ et sur l'électrode pleine couche 12 un potentiel $-V_1$. Le groupe d'électrodes $x_i$ est mis en haute impédance, c'est-à-dire isolé électriquement, et les autres groupes sont portés à un potentiel $-V_0$ tel que $V_0$ soit inférieur à $V_1$.

De façon pratique, on porte un des deux ensembles de chaque jeu d'électrodes au potentiel $-V_0$ et l'autre ensemble est mis en haute impédance. Par exemple, l'excitation du matériau située en regard de l'électrode $a_1$ se fait en portant au potentiel $-V_0$ l'ensemble $b$ des jeux d'électrodes 14 et 16 et en mettant en haute impédance l'ensemble $a$ des deux jeux 14 et 16, l'électrode pleine couche 12 étant maintenue au potentiel $-V_1$. La zone $x_iy_j$ correspondante du cristal liquide voit à ses bornes une tension peu différente de $V_2+V_1$, à condition que les couches isolantes 17 présentent une faible épaisseur par rapport à celle du cristal liquide et/ou une constante diélectrique très supérieure à celle du cristal liquide; ceci découle de la continuité du champ électrique sur les différentes électrodes d'un même groupe. Par ailleurs, étant donné que le cristal liquide utilisé présente en effet de seuil, la tension $V_2+V_1$ doit être supérieure à la tension de seuil dudit cristal. De même, les autres zones du cristal liquide en regard de la ligne $y_j$ voient à leurs bornes une tension $V_2+V_0$, tension qui doit

être inférieure à la tension de seuil du cristal liquide.

Pour obtenir l'affichage de toutes les zones d'affichage correspondant à une colonne $x_i$, on applique simultanément sur chaque électrode ligne le potentiel $V_2$ correspondant à la valeur de la propriété optique que l'on désire afficher au point intersection de cette électrode ligne et de la colonne $x_i$.

Le phénomène utilisé dans un tel dispositif d'affichage étant l'orientation collective des molécules par action d'un champ électrique sur leur moment dipolaire, pour éviter toute perturbation dans le liquide due notamment à des transits d'ions (phénomène de polarisation) il est nécessaire d'inverser la tension appliquée aux bornes du matériau, donc les potentiels appliqués sur les deux systèmes d'électrodes. Pour résoudre ce problème, on peut utiliser des tensions alternatives pour commander la propriété optique du matériau.

## Revendications

1. Dispositif d'affichage matriciel comprenant une cellule d'affichage constituée de deux parois isolantes (2, 4), et d'un matériau électro-optique comprenant une pluralité de zones réparties en matrice et intercalées entre un premier système d'électrodes (10) recouvrant l'une des deux parois et définissant $p$ colonnes de commande et un deuxième système d'électrodes recouvrant l'autre paroi, constituées de bandes conductrices parallèles, et définissant $q$ lignes de commande, la colonne $x_i$, où i est un entier tel que $1\leq i\leq p$ et la ligne $y_j$, où j est un entier tel que $1\leq j\leq q$ définissant une zone $x_iy_j$ du matériau, et comprenant des moyens permettant de délivrer sur les lignes et les colonnes des signaux d'excitation appropriés, ledit matériau présentant une propriété optique dépendant de ladite excitation, et le premier système d'électrodes comprenant n jeux d'électrodes (14, 16) disposées et groupées de façon que chaque jeu est constitué de deux ensembles d'électrodes et que le choix d'un ensemble de chaque jeu corresponde à une colonne de commande, et une seule, les n jeux d'électrodes étant disposés les uns au-dessus des autres et isolés électriquement les uns des autres, chaque ensemble comportant $p/2^k$ électrodes reliées électriquement entre elles, où k est un entier différent d'un jeu à l'autre tel que $1\leq k\leq n$, caractérisé en ce que le premier système d'électrodes comprend en outre une électrode pleine couche disposée directement sur la paroi isolante correspondante (2) sous les n jeux d'électrodes et isolée électriquement desdits jeux d'électrodes, et en ce que les moyens permettant de commander la propriété optique du matériau de la zone $x_iy_j$ comprennent des moyens pour appliquer un potentiel $-V_1$ sur l'électrode pleine couche (12) et un potentiel $-V_0$ sur tous les ensembles d'électrodes excepté celui qui correspond à la colonne $x_i$, ledit ensemble étant mis en haute impédance, et des moyens pour appliquer

sur la ligne $y_j$ un potentiel $V_2$ tel que la tension $V_2+V_1$ corresponde à la valeur désirée de la propriété optique du matériau dans la zone $x_iy_j$ et que la tension $V_2+V_0$ soit inférieure à la tension d'excitation de la propriété optique du matériau.

2. Dispositif d'affichage selon la revendication 1, caractérisé en ce que les n jeux d'électrodes sont ordonnés selon les valeurs décroissantes de l'entier k qui les définit.

3. Dispositif d'affichage selon l'une quelconque des revendications 1 et 2, caractérisé en ce que les sytèmes d'électrodes sont constitués en un matériau conducteur transparent.

4. Dispositif d'affichage selon la revendication 3, caractérisé en ce que le matériau conducteur transparent est de l'oxyde d'indium.

5. Dispositif d'affichage selon l'une quelconque des revendications 1 à 4, caractérisé en ce que le matériau est un film à cristal liquide dont la propriété optique dépend du champ électrique qui lui est appliqué.

6. Procédé de commande d'un dispositif d'affichage matriciel selon l'une quelconque des revendications 1 à 5, caractérisé en ce que, pour commander la propriété optique du matériau de la zone $x_iy_j$, on applique un potentiel $-V_1$ sur l'électrode pleine couche et un potentiel $-V_0$ sur tous les ensembles d'électrodes excepté celui qui correspond à la colonne $x_i$, ledit ensemble étant mis en haute impédance, et on applique sur la ligne $y_j$ un potentiel $V_2$ tel que la tension $V_2+V_1$ corresponde à la valeur désirée de la propriété optique du matériau dans la zone $x_iy_j$ et que la tension $V_2+V_0$ soit inférieure à la tension d'excitation de la propriété optique du matériau.

7. Procédé de commande selon la revendication 6, caractérisé en ce que l'on commande simultanément les q zones d'une même colonne $x_i$ en appliquant simultanément sur chaque ligne le potentiel $V_2$.

**Patentansprüche**

1. Matrixanzeigevorrichtung mit einer Anzeigezelle, die von zwei isolierten Platten (2, 4) und einem elektrooptischen Material gebildet ist, enthaltend eine Mehrzahl von matrixartig unterteilten Zonen, die zwischen einem ersten Elektrodensystem (10), das eine der zwei Platten bedeckt und p Steuerspalten ausbildet, und einem zweiten Elektrodensystem, das die andere Platte bedeckt und von parallelen leitfähigen Bändern gebildet sind und q Steuerzeilen bilden, angeordnet sind, wobei die Spalte $x_i$, wo i eine ganze Zahl wie $1 \leq i \leq p$ und die Zeile $y_j$, wo j eine ganze Zahl wie $1 \leq j \leq q$ eine Zone $x_iy_j$ des Materials definieren, und Einrichtungen enthaltend, die es erlauben, an die Zeilen und Spalten geeignete Erregersignale anzulegen, wobei das Material eine optische Eigenschaft aufweist, die von der genannten Erregung abhängt und das erste Elektrodensystem n Elektrodensätze (14, 16) enthält, die in Gruppen so angeordnet sind, daß jeder Satz aus zwei Elektrodenanordnungen gebildet ist und die Auswahl einer Anordnung eines jeden Satzes einer Steuerspalte entspricht und eine einzige, wobei die n Elektrodensätze übereinander angeordnet und elektrisch voneinander isoliert sind, jede Anordnung $p/2^k$ Elektroden enthält, die elektrisch miteinander verbunden sind, wobei k eine ganze Zahl ist, die von Satz zu Satz verschieden ist, wie $1 \leq k \leq n$, dadurch gekennzeichnet, daß das erste Elektrodensystem weiterhin eine Vollschichtelektrode aufweist, die direkt auf der entsprechenden isolierenden Platte (2) unter den n Elektrodensätzen angeordnet und elektrisch von den Elektrodensätzen isoliert ist, und daß die Einrichtungen, die die Steuerung der optischen Eigenschaft des Materials der Zone $x_iy_j$ erlauben, Mittel zum Anlegen eines Potentials $-V_1$ an die Vollschichtelektrode (12) und eines Potentials $-V_0$ an alle Elektrodenanordnungen mit Ausnahme jener gestatten, die der Spalte $x_i$ entspricht, wobei die Anordnung in hohe Impedanz versetzt ist, und Einrichtungen zum Anlegen eines Potentials $V_2$ an die Zeile $y_j$ enthalten, so daß die Spannung $V_2+V_1$ einem gewünschten Wert der optischen Eigenschaften des Materials in der Zone $x_iy_j$ entspricht und die Spannung $V_2+V_0$ unterhalb der Erregungsspannung der optischen Eigenschaften des Materials liegt.

2. Anzeigevorrichtung nach Anspruch 1, dadurch gekennzeichnet, daß die n Elektrodensätze gemäß abnehmender Werte der ganzen Zahl k geordnet sind, die sie bestimmt.

3. Anzeigevorrichtung nach einem der Ansprüche 1 und 2, dadurch gekennzeichnet, daß die Elektrodensysteme aus einem transparenten Leitermaterial bestehen.

4. Anzeigevorrichtung nach Anspruch 3, dadurch gekennzeichnet, daß das transparente Leitermaterial Indiumoxyd ist.

5. Anzeigevorrichtung nach einem der Ansprüche 1 bis 4, dadurch gekennzeichnet, daß das Material ein Flüssigkristallfilm ist, dessen optische Eingeschaft von dem elektrischen Feld abhängt, das an ihm anliegt.

6. Steuerungsverfahren für eine Matrixanzeigevorrichtung nach einem der Ansprüche 1 bis 5, dadurch gekennzeichnet, daß zum Steuern der optischen Eigenschaften des Materials der Zone $x_iy_j$ man ein Potential $-V_1$ an die Vollschichtelektrode und ein Potential $-V_0$ an alle Elektrodenanordnungen mit Ausnahme jener anlegt, die der Spalte $x_i$ entspricht, wobei die Anordnung in hohe Impedanz versetzt ist, und daß man an die Zeile $y_j$ ein Potential $V_2$ anlegt, so daß die Spannung $V_2+V_1$ dem gewünschten Wert der optischen Eigenschaft des Materials in der Zone $x_iy_j$ entspricht, und daß die Spannung $V_2+V_0$ unterhalb der Erregungsspannung der optischen Eigenschaft des Materials liegt.

7. Steuerungsverfahren nach Anspruch 6, dadurch gekennzeichnet, daß man gleichzeitig die q Zonen einer gleichen Spalte $x_i$ steuert, indem man gleichzeitig an jede Zeile das Potential $V_2$ anlegt.

## Claims

1. Matrix display device comprising a display cell having two insulating walls (2, 4) and an electro-optical material comprising a plurality of zones distributed in a matrix and positioned between a first electrode system (10) covering one of the two walls and defining $p$ command columns and a second electrode system covering the other wall, comprising parallel conductive bands and defining $q$ command lines, the column $x_i$, where i is an integer such that $1 \leqslant i \leqslant p$ and the line $y_j$, where j is an integer such that $1 \leqslant j \leqslant q$, defining a zone $x_i y_j$ of the material, and comprising means for the transmission of appropriate excitation signals to said lines and columns, said material having optical properties depending upon said excitation, and the first electrode system comprising n sets of electrodes (14, 16) grouped such that each set comprises two electrode assemblies, and the selection of an assembly of each set corresponds to a single command column, the n sets of electrodes being located one above the other and electrically insulated from one another, each assembly comprising $p/2^k$ electrically-connected electrodes, where k is an integer differing from set to set such that $1 \leqslant k \leqslant n$, characterized in that the first electrode system additionally comprises a continuous layer electrode located directly on the corresponding insulating wall (2) under the n sets of electrodes and electrically insulated from said sets of electrodes, and in that the means permitting command of the optical properties of the material for zone $x_i y_j$ comprise means for applying a potential $-V_1$ on the continuous layer electrode (12) and a potential $-V_0$ over all the electrode assemblies, except that corresponding to column $x_i$, said assembly being left at high impedance, and means for applying on line $y_j$ a potential $V_2$ such that the voltage $V_2 + V_1$ corresponds to the desired value of the optical property of the material in zone $x_i y_j$ and that the voltage $V_2 + V_0$ is less than the excitation voltage for the optical property of the material.

2. Display device according to Claim 1, characterized in that the n sets of electrodes are arranged in order of decreasing value of the integer k which defines them.

3. Display device according to either of Claims 1 and 2, characterized in that the electrode systems are formed from a conductive transparent material.

4. Display device according to Claim 3, characterized in that the transparent conductive material is indium oxide.

5. Display device according to any one of Claims 1 to 4, characterized in that the material is a film of a liquid crystal whose optical properties depend on the applied electric field.

6. Process for the control of a matrix display device according to any one of Claims 1 to 5, characterized in that to control the optical properties of material of zone $x_i y_j$, a potential $-V_1$ is applied to the continuous layer electrode and a potential $-V_0$ is applied over all the electrode assemblies except that corresponding to $x_i$, said assembly being left at high impedance, and a potential $V_2$ is applied on line $y_j$ such that the voltage $V_2 + V_1$ corresponds to the desired value for the optical properties of the material in zone $x_i y_j$, and the voltage $V_2 + V_0$ is less than the excitation voltage for the optical properties of the material.

7. Control process according to Claim 6, characterized in that the q zones of a single column $x_i$ are simultaneously commanded by simultaneous application of potential $V_2$ to that line.